# EUROPEAN PATENT APPLICATION

(11) **EP 4 746 222 A1**
(43) Date of publication of application: **20.05.2026**
(21) Application number: 25306801.9
(22) Date of filing: 30.10.2025
(51) Int. Cl.: H02H 1/00, H02H 7/26, H04J 3/06, H02H 3/28

(54) **DIFFERENTIAL RELAY PROTECTION APPARATUS, DEVICE, SYSTEM, METHOD, AND STORAGE MEDIUM**

(30) Priority: 15.11.2024 CN 202411641460
(71) Applicant: SCHNEIDER ELECTRIC INDUSTRIES SAS, 92500 Rueil-Malmaison (FR)
(72) Inventor: ZHENG, Kuncheng, Shanghai, 201203 (CN); LI, Rong, Shanghai, 201203 (CN); LI, Chao, Shanghai, 201203 (CN); YOUNG, Ian, Macquarie Park, NSW 2113 (AU); VIVERS, Peter, Stone (GB); KEELING, David, Shanghai, 201203 (CN); GRASSET, Henri, 92500 Rueil-Malmaison (FR); GUENEGO, Michel, 92500 Rueil-Malmaison (FR); YANG, Lingyun, Shanghai, 201203 (CN); SUPTITZ, Eric, 92500 Rueil-Malmaison (FR)
(74) Representative: Manitz Finsterwald Patent- und Rechtsanwaltspartnerschaft mbB

(57) **Abstract**

The embodiments of the present disclosure provide a differential relay protection apparatus, device, system, method, and storage medium. The differential relay protection apparatus includes: a clock module configured to create a first clock for the differential relay protection apparatus, the first clock is configured in a Precision Time Protocol domain, and create a second clock for the differential relay protection apparatus, the second clock operates independently of the first clock; a power data acquisition module configured to acquire power data collected based on the second clock; and a processing module configured to perform differential relay protection function by the first clock. The differential relay protection apparatus according to the present disclosure can configure an independent Precision Time Protocol domain for the differential relay protection function, achieving power data synchronization with low hardware cost, low system architecture complexity, high flexibility, and high operational stability, thereby achieving differential relay protection function.

## Description

### CROSS-REFERENCE TO RELATED APPLICATION

This application is based on and claims priority to Chinese Patent Application No. 202411641460.2, filed on November 15, 2024 in the Chinese Patent Office, the contents of which being herein incorporated by reference in its entirety.

### TECHNICAL FIELD

The present disclosure relates to power systems, and in particular to differential relay protection apparatus, device, system, method, and storage medium.

### BACKGROUND

Differential relay protection is implemented based on Kirchhoff's current theorem (the sum of the currents flowing into a node in a circuit is equal to zero). It treats the protected electrical device (e.g., transformers, transmission lines, etc.) as a node. When the device is operating normally, the currents flowing into and out of the electrical device are equal, the differential current is zero, and the differential relay protection does not operate. However, when a fault occurs within the device, the currents flowing into and out of the device are no longer equal, and the differential current is greater than zero. When this current exceeds the setting value of the differential relay protection apparatus, the protection is activated and the power supply to the faulty equipment is disconnected.

One of the key technologies for implementing differential relay protection is to synchronize the current sampling values at each end of electrical device, such as a transmission line. In some schemes, time synchronization of substations can be achieved based on the Global Positioning System (GPS), thereby achieving current sampling values synchronization. However, GPS-based current sampling values synchronization schemes have many uncertainties. For example, due to signal blockage from buildings, terrain, or other obstacles, and weather conditions, the GPS signal may become weak for a period of time, in which case the synchronization performance of the GPS-based current sampling values synchronization scheme may degrade or fail. Therefore, a power data synchronization scheme with low hardware cost, low system architecture complexity, high flexibility, and high operational stability is desired to enable differential relay protection function.

### SUMMARY

Embodiments of the present disclosure provide a differential relay protection apparatus, comprising: a clock module configured to: create a first clock for the differential relay protection apparatus, the first clock is configured in a Precision Time Protocol domain; and create a second clock for the differential relay protection apparatus, the second clock operates independently of the first clock; a power data acquisition module configured to acquire power data collected based on the second clock; and a processing module configured to perform differential relay protection function by the first clock.

The differential relay protection apparatus according to an embodiment of the present disclosure, wherein the Precision Time Protocol domain is further configured with first clocks of one or more other differential relay protection apparatus, wherein one of the first clocks of the one or more other differential relay protection apparatus and the first clock of the differential relay protection apparatus is set as a master clock of the Precision Time Protocol domain.

The differential relay protection apparatus according to an embodiment of the present disclosure, wherein the power data acquisition module is configured to: collect power data from a power system locally in the differential relay protection apparatus based on the second clock.

The differential relay protection apparatus according to an embodiment of the present disclosure, wherein the power data acquisition module is configured to: acquire the power data collected based on the second clock from an external merging unit, wherein the power data collected based on the second clock is collected by the external merging unit based on the second clock.

The differential relay protection apparatus according to an embodiment of the present disclosure, wherein the processing module is configured to: convert the power data collected based on the second clock acquired by the power data acquisition module into a first power data based on the first clock, perform differential relay protection function using the first power data.

The differential relay protection apparatus according to an embodiment of the present disclosure, further comprising a communication module configured to receive a second power data based on the first clock from at least a portion of the one or more other differential relay protection apparatus; wherein the processing module is configured to: perform the differential relay protection function using the first power data and the second power data.

The differential relay protection apparatus according to an embodiment of the present disclosure, wherein the communication module is further configured to transmit the first power data to at least a portion of the one or more other differential relay protection apparatus.

The differential relay protection apparatus according to an embodiment of the present disclosure, wherein the second clock is timed by an internal crystal oscillator of the differential relay protection apparatus.

The differential relay protection apparatus according to an embodiment of the present disclosure, wherein the differential relay protection apparatus is located in a substation, and the second clock is timed by the master clock of the substation via the clock module.

The differential relay protection apparatus according to an embodiment of the present disclosure, wherein the second clock is timed by the master clock of the substation using one of a Precision Time Protocol domain or an Inter-Range Instrument Group-B protocol via the clock module.

Embodiments of the present disclosure provide a differential relay protection apparatus comprising: a first clock module configured to: create a first clock for the differential relay protection apparatus, the first clock is configured in a Precision Time Protocol domain; a second clock module configured to: create a second clock for the differential relay protection apparatus, the second clock operates independently of the first clock; a power data acquisition module configured to acquire power data collected based on the second clock; and a processing module configured to perform differential relay protection function by the first clock.

Embodiments of the present disclosure provide an electrical power device comprising the relay protection apparatus described above.

Embodiments of the present disclosure provide a relay protection system comprising the relay protection apparatus described above or the electrical power device described above.

Embodiments of the present disclosure provide a method for a differential relay protection apparatus, comprising: creating a first clock for the differential relay protection apparatus, the first clock is configured in a Precision Time Protocol domain; creating a second clock for the differential relay protection apparatus, the second clock operates independently of the first clock; acquiring power data collected based on the second clock; and performing differential relay protection function by the first clock.

Embodiments of the present disclosure provide a computer-readable storage medium that stores computer-executable instruction that, when executed by a processor, implement the method described above.

The differential relay protection apparatus, device, system, method, and storage medium of the present disclosure can configure an independent Precision Time Protocol domain for the differential relay protection function, achieving power data synchronization with low hardware cost, low system architecture complexity, high flexibility, and high operational stability, thereby achieving differential relay protection function.

### BRIEF DESCRIPTION OF DRAWINGS

To more clearly illustrate the technical solutions of the embodiments of the present disclosure, the following briefly describes the drawings used in describing the embodiments. It is apparent that the drawings described below are merely exemplary embodiments of the present disclosure, and a person skilled in the art can derive other drawings from these drawings without any inventive effort.
FIG. 1A is a schematic diagram of a differential relay protection apparatus according to an embodiment of the present disclosure.
FIG. 1B is another schematic diagram of a differential relay protection apparatus according to an embodiment of the present disclosure.
FIG. 2A is a schematic diagram of a differential relay protection apparatus implementing differential relay protection function according to an embodiment of the present disclosure.
FIG. 2B is another schematic diagram of a differential relay protection apparatus implementing differential relay protection function according to an embodiment of the present disclosure.
FIG. 3 is a schematic diagram of an electrical power device according to an embodiment of the present disclosure.
FIG. 4 is a schematic diagram of a relay protection system according to an embodiment of the present disclosure.
FIG. 5 illustrates a flowchart of a method for a differential relay protection apparatus according to an embodiment of the present disclosure.
FIG. 6 is a schematic diagram of a non-transitory computer-readable medium according to an embodiment of the present disclosure.

### DETAILED DESCRIPTION

Before proceeding with the following detailed description, it may be helpful to set forth definitions of certain words and phrases used throughout this disclosure. The terms "include" and "comprise" and their derivatives mean including, but not limited to, including. The phrase "at least one of," when used with a list of items, means that different combinations of one or more of the listed items may be used, and only one item from the list may be required. For example, "at least one of A, B, and C" includes any of the following combinations: A, B, C, A and B, A and C, B and C, and A, B, and C.

Definitions for other specific words and phrases are provided throughout this disclosure. Those of ordinary skill in the art should understand that in many, if not most instances, such definitions apply to prior and future uses of such defined words and phrases.

The various embodiments of the principles of the present disclosure in this patent application document are described below in conjunction with the accompanying drawings for illustration only and should not be interpreted as limiting the scope of the present disclosure in any way. It will be understood by those skilled in the art that the principles of the present disclosure may be implemented in any appropriately arranged system or device. In some cases, the actions described in the present disclosure may be performed in a different order and can still achieve the desired result. In addition, the process depicted in the accompanying drawings does not necessarily require the specific order shown or the sequential order to achieve the desired result. In a specific embodiment, multitasking and parallel processing may be advantageous.

The text and drawings are provided as examples only to aid understanding of the present disclosure. They should not be interpreted as limiting the scope of the claims appended hereto in any way. Throughout the drawings, the same reference numerals generally indicate the same elements. Although certain embodiments and examples have been provided, it will be clear to those skilled in the art based on the contents of this disclosure that the illustrated embodiments and examples may be modified without departing from the scope of this disclosure.

Although the differential relay protection apparatus is illustrated in the drawings using modules, those skilled in the art will appreciate that the configuration of the modules is illustrative and not restrictive. In this specification, a module may be implemented by software, hardware, or a combination of software and hardware. For example, in some embodiments, multiple modules implementing multiple functions shown in the drawings may be combined into a single module implementing the same multiple functions. In other embodiments, a single module implementing some functions shown in the drawings may be split into multiple modules implementing the same functions.

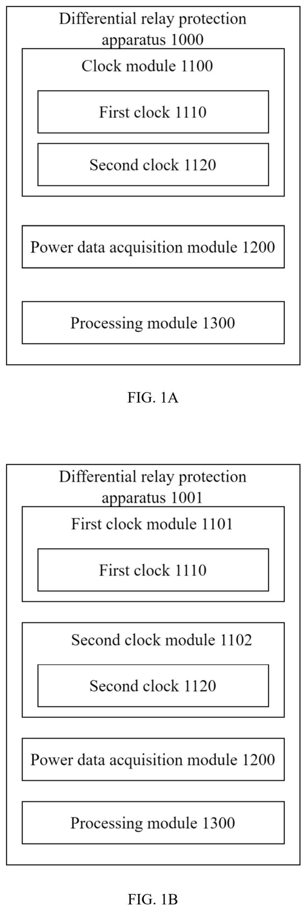

FIG. 1A is a schematic diagram of a differential relay protection apparatus according to an embodiment of the present disclosure. As shown in FIG. 1A, the differential relay protection apparatus 1000 may include a clock module 1100, a power data acquisition module 1200, and a processing module 1300.

The clock module 1100 may create a first clock 1110 for the differential relay protection apparatus 1000. The first clock 1110 is configured in a Precision Time Protocol (PTP) domain. The PTP domain is a high-precision time synchronization protocol. The PTP domain may be used in communication networks to ensure time consistency between different device. A PTP domain is a logical grouping of device using PTP. A physical network may be divided into multiple PTP domains, and each PTP domain has a synchronization time. Device within the domain synchronize time with each other through PTP, and different PTP domains are independent of each other. The first clock 1110 may be used by the differential relay protection apparatus 1000 to perform differential relay protection function. In other words, the differential relay protection apparatus 1000 may be located in a PTP time domain dedicated to implementing differential relay protection function.

The clock module 1100 may create a second clock 1120 for the differential relay protection apparatus 1000. The second clock 1120 may operate independently of the first clock 1110. The second clock 1120 may be asynchronous with the first clock 1110. For example, the second clock 1120 may be located in another time domain that is timed by other device. For another example, the second clock 1120 may run freely. The second clock 1120 may be used to collect power data. In other words, the differential relay protection apparatus 1000 may also be located in another time domain for implementing functions other than differential relay protection function.

The power data acquisition module 1200 may acquire power data collected based on the second clock 1120. The power data may include power data such as current, voltage, and frequency. The power data may be collected based on the second clock 1120. For example, the power data may be collected by the differential relay protection apparatus 1000 itself based on the second clock 1120. For another example, the power data may be collected by another device based on the second clock 1120, and the differential relay protection apparatus 1000 receives this power data from the other device.

The processing module 1300 may perform differential relay protection function by the first clock 1110. For example, the processing module 1300 may perform differential relay protection function using the power data based on the first clock 1110. The power data based on the first clock 1110 may be converted by the processing module 1300 or received by the differential relay protection apparatus 1000 from another differential relay protection apparatus.

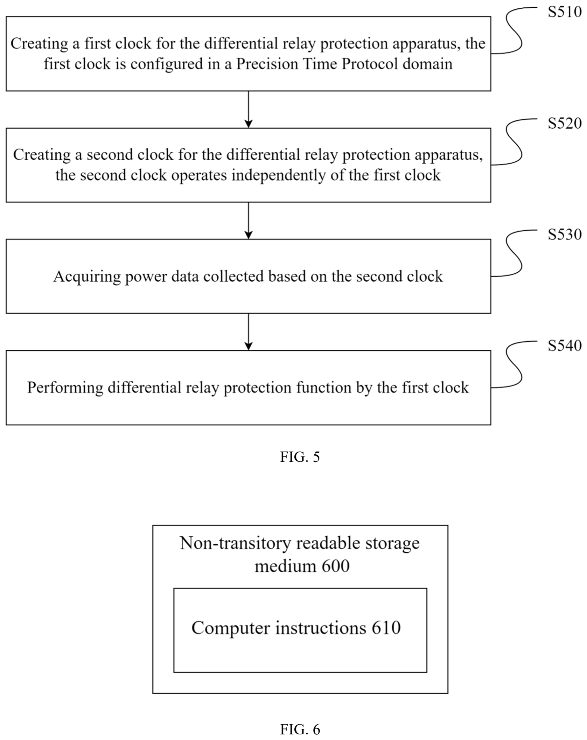

Although not shown, the differential relay protection apparatus 1000 may also include a storage module. For example, one or more computer programs may be stored in the storage module and configured to be read and executed by the processing module 1300. The one or more computer programs include instructions for executing the method for differential relay protection according to at least one embodiment of the present disclosure. When executed by the processing module 1300, the method for differential relay protection according to at least one embodiment of the present disclosure may be executed. The method for differential relay protection will be described in detail below with reference to FIG. 5.

The storage module and the processing module 1300 may be interconnected by a bus system and/or other form of connection/communication mechanism (not shown). For example, the bus may be a Peripheral Component Interconnect (PCI) bus or an Extended Industrial Standard Architecture (EISA) bus. The communication bus may be divided into an address bus, a data bus, a control bus, etc.

Exemplarily, the processing module 1300 may be a central processing unit (CPU), a digital signal processor (DSP), a graphics processing unit (GPU), or other processing unit with data processing and/or program execution capabilities, for example, a field programmable gate array (FPGA). The processing module 1300 may be a general-purpose processor or a dedicated processor, and may control other components in the differential relay protection apparatus 1000 to perform the desired functions.

Exemplarily, the storage module may include any combination of one or more computer program products, which may include various forms of computer-readable storage media, for example, volatile memory and/or non-volatile memory. Volatile memory may include, for example, random access memory (RAM) and/or cache. Non-volatile memory may include, for example, read-only memory (ROM), a hard disk, an erasable programmable read-only memory (EPROM), a portable compact disc read-only memory (CD-ROM), a USB memory, a flash memory, etc. One or more computer programs may be stored on the computer-readable storage medium, and the processing module 1300 may execute one or more computer programs to implement the various functions of the protection relay apparatus 1000. The computer-readable storage medium may also store various applications and data, as well as data used and/or generated by the applications.

For example, the differential relay protection apparatus 1000 may further include a peripheral interface (not shown). The peripheral interface may be any type of interface, for example, a USB interface, a lightning interface, or an optical fiber interface. The differential relay protection apparatus 1000 may communicate with a network and other device through wired or wireless communication. The network may be, for example, the Internet, an intranet, and/or a wireless network such as a cellular phone network, a wireless local area network (LAN), and/or a metropolitan area network (MAN), or a wired network such as optical fiber Ethernet. Wired communication may include optical fiber communication, coaxial cable communication, and the like. Wireless communication may utilize any of a variety of communication standards, protocols, and technologies, including, but not limited to, Global System for Mobile Communications (GSM), Enhanced Data GSM Environment (EDGE), Wideband Code Division Multiple Access (W-CDMA), Code Division Multiple Access (CDMA), Time Division Multiple Access (TDMA), Bluetooth, Wi-Fi (e.g., based on IEEE 802.11a, IEEE 802.11b, IEEE 802.11g, and/or IEEE 802.11n standards), Voice over Internet Protocol (VoIP), Wi-MAX, protocols for email, instant messaging, and/or Short Message Service (SMS), or any other suitable communication protocol.

The differential relay protection apparatus 1000 may be, for example, a system on a chip (SOC) or a device including such an SOC, and may be, for example, any combination of data processing modules and hardware, and the embodiments of the present disclosure are not limited thereto.

FIG. 1B is another schematic diagram of a differential relay protection apparatus according to an embodiment of the present disclosure. As shown in FIG. 1B, the differential relay protection apparatus 1001 may include a first clock module 1101, a second clock module 1102, a power data acquisition module 1200, and a processing module 1300. Components in the differential relay protection apparatus 1001 of FIG. 1B that are the same as those in FIG. 1A are not described again.

The first clock module 1101 may create a first clock 1110 for the differential relay protection apparatus 1001. The first clock 1110 is configured in a PTP domain. The first clock 1110 may be used by the differential relay protection apparatus 1001 to perform differential relay protection function. That is, the differential relay protection apparatus 1001 may be located in a PTP time domain dedicated to implementing differential relay protection function.

The second clock module 1102 may create a second clock 1120 for the differential relay protection apparatus 1001. The second clock 1120 may operate independently of the first clock 1110. The second clock 1120 may be asynchronous with the first clock 1110. For example, the second clock 1120 may be located in another time domain timed by other device. For another example, the second clock 1120 may run freely. The second clock 1120 may be used to collect power data. That is, the differential relay protection apparatus 1000 may also be located in another time domain for implementing functions other than differential relay protection function.

According to one embodiment of the disclosure, the first clock module 1101 and the second clock module 1102 may implement functions similar to those of the clock module 1100.

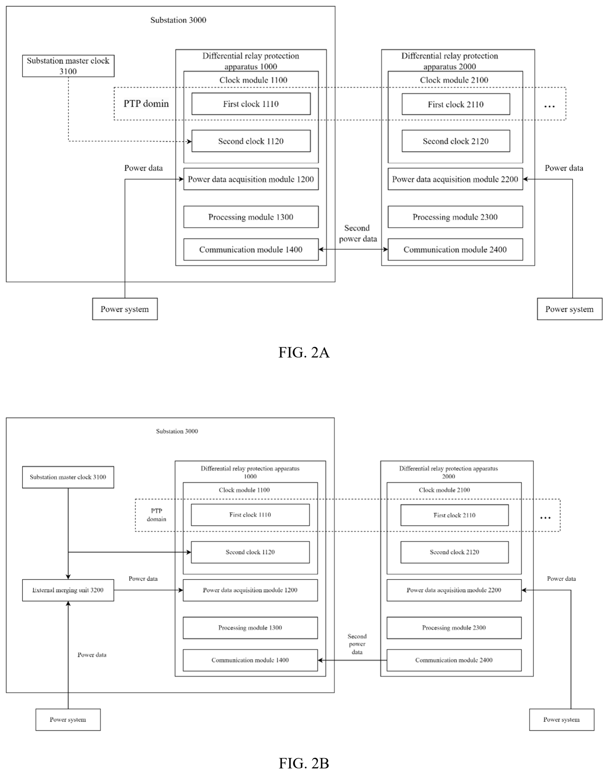

FIG. 2A is a schematic diagram of a differential relay protection apparatus implementing differential relay protection function according to an embodiment of the present disclosure.

Components in the differential relay protection apparatus 1000 of FIG. 2A that are the same as those in FIG. 1A are not described again. Those skilled in the art will understand that some configurations (e.g., the clock module 1100) of the differential relay protection apparatus 1000 and the differential relay protection apparatus 2000 in FIG. 2A may be replaced with configurations (e.g., the first clock module 1101 and the second clock module 1102) of the differential relay protection apparatus 1001 shown in FIG. 1B. As shown in FIG. 2A, the differential relay protection apparatus 1000 may also include a communication module 1400. The differential relay protection apparatus 2000 may be another differential relay protection apparatus with the same or similar configuration as the differential relay protection apparatus 1000. The description of the differential relay protection apparatus 2000 may refer to the description of the differential relay protection apparatus 1000.

As shown in FIG. 2A, one or more first clocks of other differential relay protection apparatus may also be configured in the PTP domain. For example, in addition to the first clock 1110 of the differential relay protection apparatus 1000, the first clock 2110 of the differential relay protection apparatus 2000 is also configured in the PTP domain. Although only one other differential relay protection apparatus 2000 is shown in FIG. 2A, those skilled in the art will understand that more first clocks of differential relay protection apparatus may be configured in the PTP domain.

Through the Best Master Clock Algorithm (BMCA), one first clock in the PTP domain may be set as the master clock of the PTP domain, and the remaining first clocks in the PTP domain may serve as slave clocks. For example, one of the first clocks of one or more other differential relay protection apparatus including the first clock 2110, and the first clock 1110 may be set as the master clock of the PTP domain. Other first clocks in the PTP domain may be timed by this master clock.

As shown in FIG. 2A, the power data acquisition module 1200 may be configured to collect power data from the power system locally in the differential relay protection apparatus 1000 based on the second clock 1120. For example, the power data acquisition module 1200 may include power data acquisition units such as current sensors and voltage sensors. In other words, the differential relay protection apparatus 1000 may itself collect power data based on the second clock 1120, without relying on an external power data acquisition apparatus.

As shown in FIG. 2A, the differential relay protection apparatus may be set in a substation 3000. Although not shown, the differential relay protection apparatus 2000 may also be located in another substation. In the case that the differential relay protection apparatus 1000 itself collects power data, the second clock 1120 may or may not be timed by the master clock of the substation via a clock module. In one embodiment, the second clock 1120 may be timed by an internal crystal oscillator within the differential relay protection apparatus 1000, rather than by an external apparatus or device such as substation 3000. In another embodiment, the second clock 1120 may be timed by the substation master clock (grandmaster clock, GMC) 3100 of substation 3000. The substation master clock 3100 may obtain time information using satellite positioning/communication signals. For example, the substation master clock 3100 may use Global Positioning System (GPS), Global Navigation Satellite System (GLONASS), Galileo, BeiDou, Indian Regional Navigation Satellite System (NAVIC), Quasi-Zenith Satellite System (QZSS), etc. to obtain time information. When the second clock 1120 is timed by the substation master clock 3100, the substation master clock 3100 may use one of the PTP domain and the Inter-Range Instrumentation Group-B Code (IRIG-B) protocol to time the second clock 1120 via the clock module 1100. For example, the substation master clock 3100 and second clock 1120 may be located in another PTP domain (not shown in FIG. 2A) that is independent of the PTP domain of the first clock 1110. The substation master clock 3100 may be the master clock in the PTP domain where the second clock 1120 is located. For another example, the substation master clock 3100 may use IRIG-B technology to time the second clock 1120.

The processing module 1300 may be configured to convert the power data collected based on the second clock 1120, acquired by the power data acquisition module 1200, into power data based on the first clock 1110. This conversion process may include a resampling process. For ease of description, the power data based on the first clock 1110, obtained by the processing module 1300 of the differential relay protection apparatus 1000, is referred to as first power data.

The processing module 1300 may use the first power data to perform differential relay protection function. Specifically, the processing module 1300 may perform differential relay protection function based on the first power data and power data based on the first clock from other relay protection apparatus.

As shown in FIG. 2A, the differential relay protection apparatus 1000 may further include a communication module 1400. The communication module 1400 may be configured to receive power data based on a first clock from at least a portion of one or more other differential relay protection apparatus (e.g., the differential relay protection apparatus 2000 in other differential relay protection apparatus). For ease of description, the power data based on the first clock received by the communication module 1400 of the differential relay protection apparatus 1000 is referred to as second power data. That is, when the differential relay protection apparatus 1000 is configured in substation 3000 and the differential relay protection apparatus 2000 is configured in another substation, the first power data for the differential relay protection apparatus 1000 may be power data relative to substation 3000, and the second power data may be power data relative to the another substation. For example, the second power data received by the communication module 1400 from the differential relay protection apparatus 2000 may be obtained by converting the power data obtained by the power data acquisition module 2200 through the processing module 2300 of the differential relay protection apparatus 2000.

The processing module 1300 may perform differential relay protection function using the first power data and the second power data. For example, the processing module 1300 may calculate the vector sum of currents using the first power data and the second power data to perform the differential relay protection function. The specific process of performing the differential relay protection function using the first power data and the second power data may include more steps, which are not described in detail here to avoid obscuring the focus of the invention.

The communication module 1400 may be further configured to transmit the first power data to at least a portion of one or more other differential relay protection apparatus. For example, the communication module 1400 may also transmit the first power data to the differential relay protection apparatus 2000 for the differential relay protection apparatus 2000 to perform the differential relay protection function. Alternatively or additionally, the communication module 1400 may directly transmit a tripping signal to at least a portion of one or more other differential relay protection apparatus based on the result of performing the differential relay protection function.

As shown in FIG. 2A, the differential relay protection apparatus 1000 according to an embodiment of the present disclosure may configure an independent PTP domain for the differential relay protection function. To implement the differential relay protection function, the differential relay protection apparatus may exchange power data through a wired communication network, such as fiber optic Ethernet. The PTP domain used for the differential relay protection function may also be implemented through this wired communication network. By reusing this wired communication network, power data synchronization may be achieved with low hardware cost and low system architecture complexity, thus achieving the differential relay protection function. Since the PTP domain for the differential relay protection function is implemented by a wired communication network such as fiber optic Ethernet, the synchronization of power data is unaffected or minimally affected by environmental factors, resulting in high operational stability. Furthermore, according to the embodiments of the present disclosure, time synchronization between different substations (e.g., the master clocks of each substation) is not required when implementing the differential relay protection function, thus providing high system flexibility.

FIG. 2B is another schematic diagram of a differential relay protection apparatus implementing differential relay protection function according to an embodiment of the present disclosure.

Components in the differential relay protection apparatus 1000 in FIG. 2B that are the same as those in FIG. 2A are not described again. Those skilled in the art will understand that some configurations (e.g., clock module 1100) of the differential relay protection apparatus 1000 and the differential relay protection apparatus 2000 in FIG. 2B may be replaced with configurations (e.g., first clock module 1101 and second clock module 1102) of the differential relay protection apparatus 1001 shown in FIG. 1B. As shown in FIG. 2B, the power data acquisition module 1200 acquires power data from an external merging unit (MU) 3200 of the substation 3000. The external merging unit 3200 may be an intelligent component within the substation, serving as a physical unit that performs time-correlated combination of current and voltage data from secondary transducers. The external merging unit 3200 may be part of a current transformer or a separate unit. The external merging unit 3200 may merge and synchronize the electrical quantities transmitted by the primary current transformer and forward the processed digital signal in a specific format to the intermediate layer device. In other words, the external merging unit 3200 may collect power data from the power system and transmit the collected power data to the power data acquisition module 1200.

The external merging unit 3200 may collect power data based on the second clock 1120. For example, in the case that the external merging unit 3200 collects power data, both the second clock 1120 and the external merging unit 3200 may be timed by the master clock of the substation. When the second clock 1120 and the external merging unit 3200 are timed by the substation master clock 3100, the substation master clock 3100 may use one of the PTP domain and the Inter-Range Instrumentation Group-B Code (IRIG-B) protocol to time the second clock 1120 and the external merging unit 3200. For example, the substation master clock 3100, the second clock 1120 and the external merging unit 3200 may be located in another PTP domain (not shown in FIG. 2B) that is independent of the PTP domain of the first clock 1110. The substation master clock 3100 may be the master clock in the PTP domain where the second clock 1120 and the external merging unit 3200 are located. For another example, the substation master clock 3100 may use IRIG-B technology to time the second clock 1120 and the external merging unit 3200.

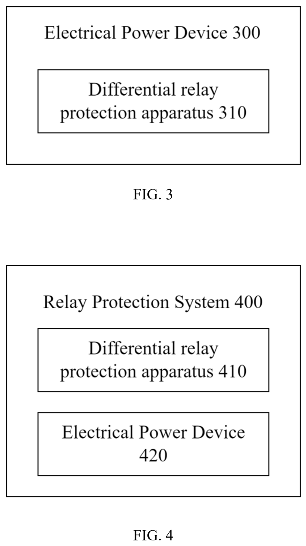

FIG. 3 is a schematic diagram of an electrical power device according to an embodiment of the present disclosure. The electrical power device may include a transformer, transmission line, etc., but the present disclosure is not limited thereto. As shown in FIG. 3, the electrical power device 300 may include a differential relay protection apparatus 310. The differential relay protection apparatus 310 may be one of the differential relay protection apparatus described with reference to FIGS. 1A-2B.

FIG. 4 is a schematic diagram of a relay protection system according to an embodiment of the present disclosure. The relay protection system 400 may be configured in a power system to implement relay protection function. As shown in FIG. 4, the relay protection system 400 may include a differential relay protection apparatus 410 and an electrical power device 420. The differential relay protection apparatus 410 may be one of the differential relay protection apparatus described with reference to FIGS. 1A-2B. The electrical power device 420 may be the electrical power device described with reference to FIG. 3.

FIG. 5 illustrates a flowchart of a method for a differential relay protection apparatus according to an embodiment of the present disclosure.

As shown in FIG. 5, the method for the differential relay protection apparatus may include steps S510-S540.

In step S510, a first clock may be created for the differential relay protection apparatus, and the first clock is configured in a Precision Time Protocol domain. For example, the Precision Time Protocol domain may be configured for the differential relay protection function.

In step S520, a second clock may be created for the differential relay protection apparatus, and the second clock operates independently of the first clock. For example, the second clock may be used for power data collection.

In step S530, power data collected based on the second clock may be acquired. For example, the differential relay protection apparatus may itself or via an external device collect power data based on the second clock.

In step S540, the differential relay protection function is performed by the first clock.

FIG. 6 is a schematic diagram of a non-transitory computer-readable medium according to an embodiment of the present disclosure.

As shown in FIG. 6, computer instructions 610 are stored on the non-transitory readable storage medium 600, and when executed by a processor, the computer instructions 610 perform one or more steps of the method for a differential relay protection apparatus and its additional aspects as described above.

Exemplarily, the non-transitory computer-readable storage medium 600 may be any combination of one or more computer-readable storage media, for example, a computer-readable storage medium containing program code for executing the various methods described above.

Exemplarily, when the program code is read by a computer, the computer may execute the program code stored in the computer storage medium to perform one or more steps of the various methods and their additional aspects, as described in at least one embodiment of the present disclosure.

Exemplarily, the non-transitory computer-readable storage medium may include a storage card of a smartphone, a storage component of a tablet computer, a hard disk of a personal computer, random access memory (RAM), read-only memory (ROM), erasable programmable read-only memory (EPROM), portable compact disc read-only memory (CD-ROM), flash memory, and other non-transitory computer-readable storage media, or any combination thereof.

Embodiments of the present disclosure also provide a computer program product or computer program comprising computer instructions stored on a computer-readable storage medium. A processor of a computer device reads the computer instructions from the computer-readable storage medium and executes them, causing the computer device to perform methods for a differential relay protection apparatus according to embodiments of the present disclosure.

The differential relay protection apparatus, device, system, method, and storage medium according to the present disclosure can configure an independent Precision Time Protocol domain for differential relay protection function, enabling power data synchronization with low hardware cost, low system architecture complexity, high flexibility, and high operational stability, thereby achieving differential relay protection function.

While the disclosure has been described with exemplary embodiments, various changes and modifications may be suggested to those skilled in the art. The disclosure is intended to cover such changes and modifications that fall within the scope of the appended claims.

No description in the present disclosure should be construed as implying that any particular element, step, or function is an essential element within the scope of the claims. The scope of the subject matter of the patent application is defined solely by the claims.

It should be noted that the flowcharts and block diagrams in the drawings illustrate possible architectures, functions, and operations of systems, methods, and computer program products according to various embodiments of the present disclosure. In this context, each block in the flowcharts or block diagrams can represent a module, program segment, or part of code, which contains at least one executable instruction for implementing the specified logical function. It should also be noted that in some alternative implementations, the functions depicted in the blocks may occur in a different order than shown in the drawings. For example, two sequentially depicted blocks can be executed essentially in parallel, or sometimes in reverse order, depending on the involved functions. It should also be noted that each block in the block diagrams and/or flowcharts, and combinations of blocks in the block diagrams and/or flowchart, can be implemented by a dedicated hardware-based system that performs the specified functions or operations, or by a combination of dedicated hardware and computer instructions.

Generally, the various exemplary embodiments of the present disclosure can be implemented in hardware or dedicated circuitry, software, firmware, logic, or any combination thereof. Some aspects may be implemented in hardware, while other aspects may be implemented in firmware or software that can be executed by a controller, microprocessor, or other computing device. When aspects of the embodiments of the present disclosure are illustrated or described using block diagrams, flowcharts, or other graphical representations, it will be understood that the blocks, apparatus, systems, techniques, or methods described herein can be implemented in hardware, software, firmware, dedicated circuitry or logic, general-purpose hardware or controllers, or other computing device, or some combination thereof, as non-limiting examples.

The exemplary embodiments of the present disclosure described in detail above are merely illustrative and not limiting. Those skilled in the art should understand that various modifications and combinations of these embodiments or their features are possible without departing from the principles and spirit of this disclosure, and such modifications should fall within the scope of this disclosure.

## Claims

1. A differential relay protection apparatus, comprising:
a clock module configured to:
create a first clock for the differential relay protection apparatus, the first clock is configured in a Precision Time Protocol domain; and
create a second clock for the differential relay protection apparatus, the second clock operates independently of the first clock;
a power data acquisition module configured to acquire power data collected based on the second clock; and
a processing module configured to perform differential relay protection function by the first clock.

2. The differential relay protection apparatus according to claim 1, wherein the Precision Time Protocol domain is further configured with first clocks of one or more other differential relay protection apparatus,
wherein one of the first clocks of the one or more other differential relay protection apparatus and the first clock of the differential relay protection apparatus is set as a master clock of the Precision Time Protocol domain.

3. The differential relay protection apparatus according to claim 1, wherein the power data acquisition module is configured to:
collect power data from a power system locally in the differential relay protection apparatus based on the second clock.

4. The differential relay protection apparatus according to claim 1, wherein the power data acquisition module is configured to:
acquire the power data collected based on the second clock from an external merging unit, wherein the power data collected based on the second clock is collected by the external merging unit based on the second clock.

5. The differential relay protection apparatus according to claim 2, wherein the processing module is configured to:
convert the power data collected based on the second clock acquired by the power data acquisition module into a first power data based on the first clock,
perform differential relay protection function using the first power data.

6. The differential relay protection apparatus according to claim 5, further comprising a communication module configured to receive a second power data based on the first clock from at least a portion of the one or more other differential relay protection apparatus;
wherein the processing module is configured to:
perform the differential relay protection function using the first power data and the second power data.

7. The differential relay protection apparatus according to claim 5, wherein the communication module is further configured to transmit the first power data to at least a portion of the one or more other differential relay protection apparatus.

8. The differential relay protection apparatus according to claim 1, wherein the second clock is timed by an internal crystal oscillator of the differential relay protection apparatus.

9. The differential relay protection apparatus according to claim 1, wherein the differential relay protection apparatus is located in a substation, and the second clock is timed by the master clock of the substation via the clock module.

10. The differential relay protection apparatus according to claim 9, wherein the second clock is timed by the master clock of the substation using one of a Precision Time Protocol domain or an Inter-Range Instrument Group-B protocol via the clock module.

11. A differential relay protection apparatus comprising:
a first clock module configured to:
create a first clock for the differential relay protection apparatus, the first clock is configured in a Precision Time Protocol domain;
a second clock module configured to:
create a second clock for the differential relay protection apparatus, the second clock operates independently of the first clock;
a power data acquisition module configured to acquire power data collected based on the second clock; and
a processing module configured to perform differential relay protection function by the first clock.

12. An electrical power device comprising the relay protection apparatus according to any of claims 1-11.

13. A relay protection system comprising the relay protection apparatus according to any of claims 1-11 or the electrical power device according to claim 12.

14. A method for a differential relay protection apparatus, comprising:
creating a first clock for the differential relay protection apparatus, the first clock is configured in a Precision Time Protocol domain;
creating a second clock for the differential relay protection apparatus, the second clock operates independently of the first clock;
acquiring power data collected based on the second clock; and
performing differential relay protection function by the first clock.

15. A computer-readable storage medium that stores computer-executable instruction that, when executed by a processor, implement the method according to claim 14.
